# EUROPÄISCHE PATENTSCHRIFT

(11) **EP 4 019 819 B1**
(45) Veröffentlichungstag und Bekanntmachung des Hinweises auf die Patenterteilung: **30.10.2024**
(21) Anmeldenummer: 21215887.7
(22) Anmeldetag: 20.12.2021
(51) Int. Cl.: F16L 3/10

(54) **VORRICHTUNG MIT ZWEI BAUTEILEN, INSBESONDERE SCHELLE MIT EINEM SCHELLENRING**
DEVICE WITH TWO COMPONENTS, IN PARTICULAR A CLAMP WITH A CLAMP RING
DISPOSITIF À DEUX COMPOSANTS, EN PARTICULIER COLLIER DOTÉ D'UN ANNEAU DE COLLIER

(30) Priorität: 21.12.2020 DE 102020134433
(43) Veröffentlichungstag der Anmeldung: 29.06.2022
(73) Patentinhaber: Sikla Holding GmbH, 4614 Marchtrenk (AT)
(72) Erfinder: Menz, Peter, 78661 Dietingen (DE)
(74) Vertreter: Mertzlufft-Paufler, Cornelius

(56) Entgegenhaltungen:
- EP-A1- 0 567 821
- EP-B1- 0 471 989
- US-A1- 2008 282 514

## Beschreibung

Die Erfindung betrifft eine Vorrichtung mit zwei Bauteilen, von denen ein erstes Bauteil als Oberteil und ein zweites Bauteil als Unterteil ausgebildet ist, an welchen Bauteilen jeweils zumindest eine Lasche im Bereich eines Abbugs abgewinkelt vorsteht, welche Laschen paarweise einander zugeordnet sind und wenigstens einen Verschluss der Vorrichtung bilden und von denen eine Lasche eine Durchstecköffnung aufweist, durch die ein von der zugeordneten anderen Lasche gehaltener Verschlusszapfen mit einem am freien Zapfenende vorgesehenen Zapfenkopf derart durchsteckbar ist, dass der Verschlusszapfen mit seinem Zapfenkopf eine Verschlussklappe aus einer an der benachbarten Lasche anliegenden Ausgangsposition gegen die Rückstellkraft eines Federelements in eine Offenposition verschwenkt, bis die Verschlussklappe in ihre Ausgangslage zurückschwenkt, in welcher die von einem Zapfenschaft des Verschlusszapfens durchsetzte Verschlussklappe den Zapfenkopf hintergreift.

Aus der EP 3 444 513 A1 ist bereits eine Vorrichtung der eingangs erwähnten Art vorbekannt, die als Rohrschelle ausgebildet ist, mit der ein Rohrabschnitt oder dergleichen länglicher Gegenstand an einer Wand, einer Decke oder einer vergleichbaren Tragkonstruktion gehalten werden kann. Die vorbekannte Rohrschelle weist dazu einen ein- oder zweiteiligen Schellenbügel oder Schellenring auf, der zur Aufnahme des länglichen Gegenstandes einen vom Schellenbügel umschlossenen Aufnahmeraum und zum Einführen des länglichen Gegenstands in den Aufnahmeraum wenigstens eine Einführöffnung aufweist. Dabei wird die wenigstens eine Einführöffnung durch zwei gelenkig oder biegeelastisch miteinander verbundene Bauteile begrenzt, von denen ein erstes Bauteil als Unterteil und ein zweites Bauteil als Oberteil des Schellenbügels ausgebildet ist. An den zueinander benachbarten Endbereichen dieser Bauteile steht jeweils zumindest eine Lasche im Bereich eines Abbugs abgewinkelt vor. Diese beiden Laschen an dem Ober- beziehungsweise dem Unterteil sind einander zugeordnet und bilden wenigstens einen Verschluss, mit dem sich die Einführöffnung am Schellenbügel zumindest vorläufig verschließen lässt. Dazu weist die eine der einander zugeordneten Laschen eine Durchstecköffnung auf, durch welche Durchstecköffnung ein von der zugeordneten anderen Lasche gehaltener Verschlusszapfen mit einem am freien Zapfenende vorgesehenen Zapfenkopf derart durchsteckbar ist, dass der dort vorzugsweise als Gewindeschraube ausgebildete Verschlusszapfen mit seinem Schraubenkopf oder dergleichen Zapfenkopf eine Verschlussklappe aus einer an der benachbarten Lasche anliegenden Ausgangsposition gegen die Rückstellkraft eines als Gummiring ausgebildeten Federelements in eine Offenposition verschwenkt, bis die Verschlussklappe in ihre Ausgangslage zurückschwenkt, in welcher die von einem Gewinde- oder dergleichen Zapfenschaft des Verschlusszapfens durchsetzte Verschlussklappe den Schrauben- oder Zapfenkopf hintergreift. Die Verschlussklappe läuft dabei durch die Durchstecköffnung für den Verschlusszapfen hindurch. Hierdurch wird ein Gelenk, insbesondere ein Drehgelenk, mit einer Schwenkachse gebildet, um welche die Verschlussklappe zwischen einer Ausgangsposition, in welcher die Verschlussklappe den Verschlusszapfen im Bereich seines Zapfenkopfes hintergreift, und einer Offenposition schwenken kann, in welcher die Verschlussklappe die Durchstecköffnung für den Zapfenkopf freigibt. Vorzugsweise liegt die Verschlussklappe in der Ausgangs- oder Fangposition größtenteils an der benachbarten Lasche an und ist in der Offenposition größtenteils von dieser Lasche abgehoben. Die Verschlussklappe weist einen Fangbereich zum Fangen, das heißt zum formschlüssigen Halten des Verschlusszapfens und Hintergreifen seines Zapfenkopfes auf. Dieser Fangbereich kann etwa U-förmig ausgebildet sein, damit der Verschlusszapfen für eine besonders gute Kraftübertragung umgriffen werden kann. An den Fangbereich schließt sich ein Durchführbereich der Verschlussklappe an, an welchem die Verschlussklappe durch die Durchstecköffnung hindurchläuft. Fangbereich und Durchführbereich bilden dabei die Schenkel einer L-Form. An den Durchführbereich der Verschlussklappe wiederum schließt sich ein Rückbereich an, der nicht zwingend vorhanden sein muss. Fangbereich, Durchführbereich und Rückbereich der Verschlussklappe bilden die Schenkel einer Z-Form, wobei der Durchführbereich zwischen dem Fangbereich und dem Rückbereich angeordnet ist. Damit die Verschlussklappe der vorbekannten Vorrichtung nach dem Durchstecken des Verschlusszapfens durch die Durchstecköffnung selbsttätig wieder in die Ausgangs- oder Fangposition zurückkehrt, ist ein elastischer Gummiring vorgesehen, welcher eine Rückstellkraft auf die Verschlussklappe ausübt und diese in ihre Ausgangsposition drängt. Dieser elastische Gummiring umspannt einen der beiden Laschen sowie die dazu benachbarte Verschlussklappe.

Da die Durchtrittsöffnung bei der vorbekannten Vorrichtung ausreichend groß bemessen sein muss, damit der Zapfenkopf durch die Durchtrittsöffnung hindurchpasst, und damit über den Zapfenschaft hinaus zusätzlich auch der als Drehgelenk dienende Teilbereich der Verschlussklappe durch die Durchstecköffnung hindurchgeführt werden kann, stellt diese Durchstecköffnung eine nicht unerhebliche Materialschwächung der vorbekannten Vorrichtung im Bereich ihres Verschlusses dar, welche die Belastbarkeit der vorbekannten Vorrichtung in diesem Bereich nicht unerheblich mindern kann.

Aus der EP 0 471 989 B1 ist eine Rohrschelle vorbekannt, die aus zwei etwa halbkreisförmigen, etwa eine gemeinsame Mittelachse aufweisenden, an ihrem einen Ende mittels eines Gelenks miteinander verbundenen Bügeln besteht. Dabei ist der eine Bügel an seinem anderen Ende mit einem Gewindeflansch versehen, in den eine Schraube eingeschraubt ist. Der andere Bügel ist an seinem anderen Ende mit einem dem Gewindeflansch zugeordneten Verriegelungsflansch versehen, der mit einer Einrichtung zum Fangen des Kopfes der Schraube versehen ist. Die aus dieser Druckschrift vorbekannte Rohrschelle ist dadurch gekennzeichnet, dass der Verriegelungsflansch eine Durchlassöffnung aufweist, deren Durchmesser mindestens dem des Kopfes der Schraube entspricht, und dass auf der dem Gewindeflansch abgewandten Seite des Verriegelungsflansches an diesem eine Fangplatte angebracht ist, die gegen die Kraft eines elastischen Gliedes um eine Schwenkachse von dem Verriegelungsflansch wegschwenkbar ist, und die eine Öffnung aufweist, deren Weite geringer ist als der Durchmesser des Kopfes der Schraube und die zu dem Rand der Fangplatte hin offen ist, der der Schwenkachse gegenüberliegt.

Aus der US 2008 282 514 A1 ist vorbekannt eine Rohrschelle zur Befestigung eines Rohres an einer Wand, einer Decke oder einem anderen Träger, umfassend: einen Schellenkörper mit einer Öffnung zum Befestigen der Rohrschelle um das Rohr herum, wobei die Öffnung durch ein erstes und ein zweites Ende des Schellenkörpers begrenzt ist, ein Spannelement, das einen Kopf und einen Schaft aufweist, wobei der Kopf des Spannelementes mit dem ersten Ende des Schellenkörpers in Eingriff steht, ein weibliches Befestigungselement, das schwenkbar mit dem zweiten Ende des Schellenkörpers verbunden ist und in das der Schaft des Spannelementes eingesetzt ist, wobei das erste Ende des Schellenkörpers einen ersten Flansch mit einer Aussparung für den Schaft des Spannelementes aufweist, wobei die Aussparung so dimensioniert ist, dass der Kopf des Spannelementes dort hindurch passt, und dass an der dem zweiten Ende des Schellenkörpers abgewandten Seite des ersten Flansches eine Arretierplatte schwenkbar befestigt ist, die eine einseitig offene Ausnehmung für den Schaft des Spannelementes aufweist, so dass, wenn der Kopf des Spannelementes beim Schließen des Schellenkörpers durch die Ausnehmung im ersten Flansch gegen die Arretierplatte gedrückt wird, die Arretierplatte so verschwenkt wird, dass der Schaft des Spannelementes über das offene Ende in der Ausnehmung der Arretierplatte aufgenommen wird.

Aus der EP 0 567 821 A1 ist vorbekannt eine Rohrschelle, bestehend aus zwei etwa halbkreisförmigen, etwa eine gemeinsame Mittelachse aufweisenden, an ihrem einen Ende mittels eines Gelenks miteinander verbundenen Bügeln, wobei der eine Bügel an seinem anderen Ende mit einem Loch-Flansch versehen ist, in dem eine Schraube angeordnet ist, und wobei der andere Bügel an seinem anderen Ende mit einem dem Loch-Flansch zugeordneten Widerlager-Flansch versehen ist, der mit einer Einrichtung zur Aufnahme des Außengewindes der Schraube versehen ist. Diese Rohrschelle ist dadurch gekennzeichnet, dass der als Widerlager-Flansch ausgebildete Flansch eine Durchlass-Öffnung aufweist, deren Durchmesser mindestens dem des Außengewindes der Schraube entspricht, und dass auf der dem Loch-Flansch abgewandten Seite des Widerlager-Flansches an diesem eine Verriegelungs-Platte angeordnet ist, die gegen die Kraft eines elastischen Gliedes um eine Schwenkachse von dem Widerlager-Flansch wegschwenkbar ist, und die eine Verriegelungs-Öffnung aufweist, die auf einer Seite durch ein etwa halbzylindrisches, dem Außengewinde der Schraube entsprechendes Innengewinde und auf der anderen Seite durch einen in Richtung der Längsachse der Verriegelungs-Öffnung gegenüber dem Innengewinde versetzten Anschlag begrenzt wird, wobei bei am Widerlager-Flansch anliegender Verriegelungs-Platte das Außengewinde der Schraube durch den Anschlag im Innengewinde der Verriegelungs-Öffnung gehalten ist, während bei gegenüber dem Widerlager-Flansch verschwenkter Verriegelungs-Platte das Außengewinde der Schraube gegenüber dem Innengewinde der Verriegelungs-Öffnung frei ist.

Aus der DE 41 24 122 A1 ist eine weitere Vorrichtung vorbekannt, die zum Beispiel als Kasten mit Unterteil und Deckel und insbesondere als Montagehalterung beziehungsweise Montageschelle mit Unterteil und Oberteil ausgebildet sein kann. Damit bei der vorbekannten Vorrichtung eine sichere, dauerhafte, passgenaue und dichte Schließung zwischen dem Oberteil und dem Unterteil erreicht werden kann, selbst wenn das Unterteil und das Oberteil der vorbekannten Vorrichtung an unzugänglicher Stelle angeordnet sind, sind an diesen Bauteilen einander paarweise zugeordnete Laschen mit jeweils einem nach außen offenen Schlitz oder Langloch vorgesehen. Eine ebenfalls laschenförmige Verschlussklappe greift an der Lasche eines der Bauteile an und weist eine Gewindebohrung auf, in die der Gewindeschaft einer als Verschlusszapfen dienenden Gewindeschraube eingeschraubt ist. Die Verschlussklappe hat eine Abkröpfung, welche in Ausnehmungen am Oberteil eingreift. Die in die Gewindebohrung der Verschlussklappe eingedrehte Gewindeschraube greift in einen randseitig offenen Schlitz der gegenüberliegenden Lasche des anderen Bauteils ein. Beim Schließen der Einführöffnung der vorbekannten Vorrichtung wird die Gewindeschraube so weit zur Seite gedrückt, dass die Lasche des Oberteiles am Schraubenkopf vorbeigleiten kann. Dabei wird der Verschluss der vorbekannten Vorrichtung geschlossen und die Gewindeschraube springt selbsttätig durch die Rückstellkraft eines Gummirings in ihre Ausgangsposition zurück. Dadurch ist es möglich, den Verschluss auch dieser vorbekannten Vorrichtung mit nur einer Hand zu bedienen, was besonders vorteilhaft bei der Anordnung an schlecht zugänglichen Stellen sein kann. Da aber auch bei dieser vorbekannten Vorrichtung die Verschlussklappe gelenkig in einer Laschenöffnung der Lasche einer dieser Bauteile gehalten ist, und da auch hier die entsprechende Laschenöffnung sich bis zum freien Ende der Lasche erstreckt, ist auch diese vorbekannte und vorzugsweise als Rohrschelle ausgebildete Vorrichtung im Bereich ihres Verschlusses nicht unerheblich geschwächt.

Es besteht daher insbesondere die Aufgabe, eine Vorrichtung der eingangs erwähnten Art zu schaffen, die sich auch im

Bereich des Verschlusses durch eine vergleichsweise hohe Belastbarkeit auszeichnet.

Die erfindungsgemäße Lösung dieser Aufgabe wird durch den Anspruch 1 definiert und besteht bei der Vorrichtung der eingangs erwähnten Art insbesondere darin, dass die Verschlussklappe im Bereich des Abbugs um eine in Längsrichtung der Biegelinie des Abbugs angeordnete Schwenkachse verschwenkbar ist, dass zumindest das die Lasche mit der Verschlussklappe tragende Bauteil im Bereich des Abbugs wenigstens eine Sicke aufweist, dass die Verschlussklappe an ihrer dem benachbarten Bauteil zugewandten Querseite eine erste Ein- oder Ausformung aufweist und mit dieser ersten Ein- oder Ausformung derart an der wenigstens einen Sicke anliegt, dass die Verschlussklappe in Längsrichtung der Biegelinie gegen ein Verrutschen gesichert ist, und dass das Federelement an zumindest einer Längsseite der Verschlussklappe durch wenigstens eine zweite Aus- oder Einformung der Verschlussklappe an dieser gesichert gehalten ist.

Die vorliegende Erfindung betrifft eine Vorrichtung mit wenigstens zwei Bauteilen, von denen ein erstes Bauteil als Oberteil und ein zweites Bauteil als Unterteil ausgebildet ist. Diese wenigstens zwei, einander zugeordneten Bauteile sind mit Hilfe eines Verschlusses miteinander verbindbar. Die beiden, einander zugeordneten und mittels dem Verschluss miteinander verbindbaren Bauteile können als voneinander getrennte und/oder trennbare Bestandteile der Vorrichtung ausgebildet oder auch mit Abstand von dem Verschluss gelenkig oder biegeelastisch miteinander verbunden sein. Dabei kann die erfindungsgemäße Vorrichtung beispielsweise als Kasten mit Unterteil und Deckel oder als Montagehalterung und insbesondere als Schelle ausgebildet sein, bei der die einander zugeordneten Schellenenden wenigstens eines Schellenbügels mit Hilfe des Verschlusses in einer Montage- oder Vormontageposition aneinander gehalten sind.

An den einander zugeordneten und hier als Unterteil und Oberteil bezeichneten Bauteilen der erfindungsgemäßen Vorrichtung steht jeweils zumindest eine Lasche im Bereich eines Abbugs abgewinkelt vor. Von diesen, den wenigstens einen Verschluss der Vorrichtung bildenden Laschen weist die eine Lasche eine Durchstecköffnung auf, durch die ein an der zugeordneten anderen Lasche gehaltener Verschlusszapfen mit einem am freien Zapfenende vorgesehenen Zapfenkopf derart durchsteckbar ist, dass der Verschlusszapfen mit seinem Zapfenkopf eine Verschlussklappe aus einer an der benachbarten Lasche anliegenden Ausgangsposition gegen die Rückstellkraft eines Federelements in eine Offenposition verschwenkt, bis die Verschlussklappe in ihre Ausgangslage zurückschwenkt, in welcher die von einem Zapfenschaft des Verschlusszapfens durchsetzte Verschlussklappe den Zapfenkopf hintergreift. Da die Verschlussklappe im Bereich des Abbugs um eine in Längsrichtung der Biegelinie des Abbugs angeordnete Schwenkachse verschwenkbar ist, und da der an der gegenüberliegenden anderen Lasche gehaltene Verschlusszapfen mit seinem Zapfenkopf durch die Durchstecköffnung gestoßen wird, wo der Verschlusszapfen mit seinem an der Verschlussklappe anstoßenden Zapfenkopf die Verschlussklappe verschwenkt, ist das Schließen des Verschlusses mit einem vergleichsweise geringen Kraftaufwand auf einfache Weise möglich. Zumindest das die Lasche mit der Verschlussklappe tragende Bauteil weist im Bereich des Abbugs wenigstens eine Sicke auf. Diese wenigstens eine Sicke erhöht nicht nur die Belastbarkeit dieses Bauteiles, sondern sichert die Verschlussklappe in Längsrichtung der Biegelinie des Abbugs gegen ein Verrutschen insbesondere während der Schwenkbewegung der Verschlussklappe. Die Verschlussklappe weist dazu an ihrer dem benachbarten Bauteil zugewandten Querseite eine erste Ein- oder Ausformung auf, mit der die Verschlussklappe an der wenigstens einen Sicke des Bauteiles anliegt. Dabei ist das als Rückstellkraft dienende Federelement an zumindest einer Längsseite der Verschlussklappe durch wenigstens eine zweite Aus- oder Einformung der Verschlussklappe gegen ein Abrollen oder Abrutschen gesichert gehalten. Da die Verschlussklappe an der erfindungsgemäßen Vorrichtung nicht durch eine Durchstecköffnung der benachbarten Lasche hindurchgeführt werden muss, um eine Verschwenkbarkeit der Verschlussklappe zu erreichen, und da die an zumindest einer der Laschen vorgesehene Durchstecköffnung nur so bemessen sein muss, dass der Zapfenkopf des Verschlusszapfens hindurchpasst, zeichnet sich die erfindungsgemäße Vorrichtung auch im Bereich ihres Verschlusses durch eine vergleichsweise große Belastbarkeit aus, wobei die verschiedenen Bestandteile der erfindungsgemäßen Vorrichtung vergleichsweise einfach herstellbar sind.

Eine bevorzugte Ausführung gemäß der Erfindung sieht vor, dass die Vorrichtung als Schelle und insbesondere als Rohrschelle ausgebildet ist, die einen Schellenring hat, der zum Aufnehmen eines länglichen Gegenstandes und insbesondere eines Rohrabschnitts einen Aufnahmeraum und zum Einführen des länglichen Gegenstandes in den Aufnahmeraum eine Einführöffnung aufweist, die mit Hilfe des zumindest einen Verschlusses verschließbar ist. Da die erfindungsgemäße Vorrichtung sich auch im Bereich ihres Verschlusses durch eine hohe Belastbarkeit auszeichnet, können durch die Einführöffnung hindurch in den vom Schellenring umgrenzten Aufnahmeraum auch längere und entsprechend schwere Rohrabschnitte eingelegt werden, die nach dem Durchstoßen des Verschlusszapfens durch die Durchstecköffnung und nach dem Aufschwenken der Verschlussklappe in die Offenposition sowie dem nachfolgenden Zurückschwenken der Verschlussklappe in die an der benachbarten Lasche anliegende Ausgangsposition, in welcher der Zapfenkopf des Verschlusszapfens von der Verschlussklappe hintergriffen wird, im Aufnahmeraum in einer Vormontagestellung sicher gehalten sind.

Vorteilhaft ist es, wenn an gegenüberliegenden Längsseiten der Verschlussklappe jeweils zumindest eine zweite Aus- oder Einformung zum gesicherten Halt des Federelements vorgesehen ist. Da an gegenüberliegenden Längsseiten der Verschlussklappe jeweils zumindest eine zweite Aus- oder Einformung zum gesicherten Halt des Federelements vorgesehen ist, wird einem unbeabsichtigten Abrollen oder Abrutschen des Federelements von der Verschlussklappe entgegengewirkt.

Eine weiterbildende Ausführungsform gemäß der Erfindung sieht vor, dass das Federelement auf der dem benachbarten Bauteil zugewandten Seite beidseits mittels einer an der Verschlussklappe vorstehenden zapfenförmigen Ausformung gesichert auf der Verschlussklappe gehalten ist. Bei dieser Ausführungsform stehen an der Verschlussklappe beidseits zapfenförmig ausgestaltete zweite Ausformungen vor, die das Federelement auf der dem benachbarten Bauteil zugewandten Seite auf der Verschlussklappe halten, und zwar selbst dann, wenn die Verschlussklappe von ihrer Ausgangsposition in ihre Offenposition verschwenkt und das Federelement entsprechend gedehnt wird.

Die einfache Montage der erfindungsgemäßen Vorrichtung im Bereich ihres Verschlusses und der sichere Halt des Federelements auf der Verschlussklappe werden begünstigt, wenn auf gegenüberliegenden Seiten der Verschlussklappe an dieser jeweils eine randseitig offene zweite Einformung vorgesehen ist, in welchen zweiten Einformungen das Federelement die Verschlussklappe umgreift.

Dabei wird eine Ausführung bevorzugt, bei welcher das Federelement auf beiden Längsseiten der Verschlussklappe in jeweils einer randseitig offenen Einformung oder Einkerbung der Verschlussklappe diese umgreift, wobei das Federelement auf der dem benachbarten Bauteil zugewandten Seite dieser Einformungen oder Einkerbungen mittels an der Verschlussklappe beidseits vorstehender zapfenförmiger Ausformungen zusätzlich, auch während der Schwenkbewegungen der Verschlussklappe, an dieser gesichert gehalten ist.

Um die Verschlussklappe möglichst sicher an der benachbarten Lasche zu halten, wenn die Verschlussklappe den Zapfenkopf des Verschlusszapfens hintergreift, ist es vorteilhaft, wenn gegenüberliegende Randseiten der Verschlussklappe derart abgewinkelt sind, dass die Verschlussklappe mit ihren abgewinkelten Längsrändern die benachbarte Lasche in der Ausgangslage zwischen sich aufnimmt.

Da die Durchstecköffnung zum Durchstecken des Verschlusszapfens und ihres Zapfenkopfes keine weiteren Teilbereiche der Verschlussklappe gelenkig aufzunehmen hat, ist es nicht nur ausreichend, sondern auch vorteilhaft, wenn die Durchstecköffnung einen gegenüber dem Durchmesser des Zapfenkopfes möglichst nur wenig vergrößerten und vorzugsweise kreisrunden Öffnungsdurchmesser aufweist.

Damit die Verschlussklappe in ihre an der benachbarten Lasche anliegende Ausgangsposition zurückschwenken und dabei gleichzeitig einen möglichst großen Teilbereich des Zapfenkopfes hintergreifen kann, ist es zweckmäßig, wenn an der dem Verschlusszapfen zugewandten Querseite der Verschlussklappe eine randseitig offene und vorzugsweise kreissegmentförmige Schaftöffnung oder Einkerbung vorgesehen ist, die in ihrer Kontur an den Querschnitt des Zapfenschafts formangepasst ist.

Auch bei der erfindungsgemäßen Vorrichtung könnte der Verschlusszapfen beispielsweise eine Raststange mit einer Ausnehmung oder auch mit zwei oder mehr, übereinander angeordneten Ausnehmungen für die Verschlussklappe sein.

Eine konstruktiv einfache, leicht bedienbare und auch deshalb bevorzugte Ausführung gemäß der Erfindung sieht jedoch vor, dass der Verschlusszapfen als Gewindeschraube ausgebildet ist, deren Schraubenkopf den Zapfenkopf und deren Gewindeschaft den Zapfenschaft bildet.

Der Verschlusszapfen kann an der dem Zapfenkopf abgewandten Lasche angeschweißt, angeformt oder dergleichen unverrückbar beziehungsweise fest gehalten sein.

Eine bevorzugte Weiterbildung gemäß der Erfindung sieht jedoch vor, dass die Gewindeschraube in ein Innengewinde an der dem Schraubenkopf abgewandten Lasche einschraubbar ist. Diese weiterbildende Ausführung erlaubt es, die Gewindeschraube derart in das Innengewinde an der Lasche einzuschrauben, bis die den Schraubenkopf hintergreifende Verschlussklappe zwischen dem Schraubenkopf einerseits und der benachbarten Lasche andererseits fest eingespannt und die Verschlussklappe in dieser Montagestellung gegen ein Verschwenken gesichert ist. Bei einer solchen Ausführungsform kann der längliche Gegenstand im Aufnahmeraum der Schelle durch bloßes Hindurchstoßen des Verschlusszapfens durch die Durchstecköffnung in einer Vormontagestellung fest und sicher gehalten werden. Durch nachfolgendes Einschrauben der als Verschlusszapfen dienenden Gewindeschraube in das an der gegenüberliegenden Lasche vorgesehene Innengewinde lässt sich die den Schraubenkopf hintergreifende Verschlussklappe derart zwischen dem Schraubenkopf einerseits und der an der benachbarten Lasche anliegenden Verschlussklappe andererseits einspannen, dass der Verschluss der als Schelle ausgebildeten erfindungsgemäßen Vorrichtung in dieser Montagestellung gegen ein unbeabsichtigtes Lösen gesichert ist.

Um die Relativposition der relativ zueinander schwenkbeweglich verbundenen Bestandteile, nämlich der Verschlussklappe einerseits und der benachbarten Lasche andererseits, in der Ausgangslage zu sichern und derart festzulegen, dass die Verschlussklappe den Zapfenkopf sichert und unverrückbar hintergreift, ist es vorteilhaft, wenn die die Verschlussklappe tragende Lasche in dem dem benachbarten Bauteil zugewandten Randbereich der Durchstecköffnung eine Vertiefung aufweist, und wenn die Verschlussklappe eine Ausbiegung oder Auswölbung hat, die in der Ausgangslage an der Vertiefung anliegt und zu dieser formangepasst ausgebildet ist.

Zu dem selben Zweck kann es vorteilhaft sein, wenn sich die Vertiefung von der an das benachbarte Bauteil angrenzenden Querseite der Lasche bis etwa zu einer zur Biegelinie parallelen Mittellinie der Durchstecköffnung erstreckt.

Dabei sieht eine besonders belastbare Ausführung gemäß der Erfindung vor, bei der die Verschlussklappe den Zapfenkopf großflächig hintergreift und bei der die Verschlussklappe gleichzeitig ebenfalls großflächig an der benachbarten Lasche anliegt, dass die dem Bauteil abgewandte Querseite der Verschlussklappe im Bereich der Vertiefung einen eingeschnittenen oder eingezogenen Randabschnitt hat, der in der Ausgangslage an der benachbarten Querseite der Vertiefung anliegt.

Besonders vorteilhaft ist es, wenn die Durchstecköffnung an der Lasche und die Schaftöffnung oder Einkerbung an der Verschlussklappe in der Ausgangslage konzentrisch zueinander angeordnet sind.

Um den Zapfenkopf gegen ein Verschieben in die dem Bauteil abgewandte Richtung zu sichern, ist es vorteilhaft, wenn die die Verschlussklappe tragende Lasche an dem dem benachbarten Bauteil abgewandten Randbereich der Durchstecköffnung eine Sicke oder eine Ausbiegung aufweist.

Erfindungsgemäß ist vorgesehen, dass das Federelement als zumindest ein vorzugsweise elastischer Gummiring und/oder als zumindest eine Schenkelfeder und/oder als zumindest eine Wendel-Zugfeder ausgebildet ist.

Weiterbildungen gemäß der Erfindung ergeben sich aus der nachfolgenden Beschreibung eines bevorzugten Ausführungsbeispiels in Verbindung mit den Ansprüchen sowie der Zeichnung. Nachstehend wird die Erfindung anhand eines bevorzugten Ausführungsbeispiels noch näher beschrieben.

Es zeigt:
- Fig. 1: eine als Schelle und insbesondere als Rohrschelle ausgebildete Vorrichtung in einer perspektivischen Darstellung mit Blick auf die Unterseite eines Schellenrings,
- Fig. 2: die Schelle aus Figur 1 in einer perspektivischen Darstellung mit Blick auf die Oberseite des Schellenrings, wobei ein an der Außenseite des Schellenrings vorstehender Gewindezapfen erkennbar ist,
- Fig. 3: die hier ebenfalls perspektivisch dargestellte Schelle aus den Figuren 1 und 2 mit ihrem Schellenring, der aus zwei separaten Ringhälften gebildet ist, welche an ihren freien Ringhälften-Enden paarweise einander zugeordnete Laschen haben, von denen ein erstes Laschenpaar ein Schwenkgelenk zwischen den Ringhälften bildet, und von denen ein zweites Laschenpaar als der Verschluss einer Einführöffnung dient, welche Einführöffnung zu dem vom Schellenring umgrenzten Aufnahmeraum führt,
- Fig. 4: die Schelle aus den Figuren 1 bis 3 in einer Seitenansicht,
- Fig. 5: die Schelle aus den Figuren 1 bis 4 in einer perspektivischen Detailansicht im Bereich ihres Verschlusses, welcher Verschluss eine Verschlussklappe hat, die an einer der beiden, den Verschluss bildenden Laschen von einer Ausgangsposition gegen die Rückstellkraft eines als Gummiring ausgebildeten Federelements in die hier gezeigte Offenposition verschwenkbar ist,
- Fig. 6: den Verschluss der in den Figuren 1 bis 5 gezeigten Schelle in einer vergrößerten Detailansicht,
- Fig. 7: den Verschluss der in den Figuren 1 bis 6 dargestellten Schelle in der Ausgangsposition der Verschlussklappe, in welcher Ausgangsposition die Verschlussklappe an der benachbarten Lasche anliegt,
- Fig. 8: die Schelle aus den Figuren 1 bis 7 in einer Detaildraufsicht auf die Verschlussklappe, die in der hier gezeigten Ausgangslage an der benachbarten Lasche anliegt,
- Fig. 9: die als Oberteil der in den Figuren 1 bis 8 gezeigten Schelle dienende Ringhälfte in einer perspektivischen Darstellung,
- Fig. 10: den Verschluss der in den Figuren 1 bis 9 gezeigten Schelle in einer perspektivischen Detailansicht,

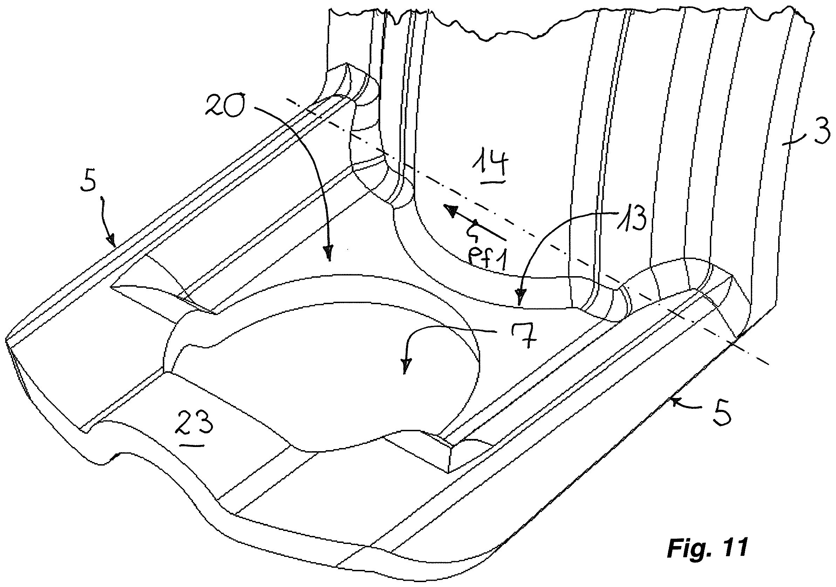

- Fig. 11: die als Oberteil dienende Ringhälfte der in den Figuren 1 bis 10 gezeigten Schelle in einer perspektivischen Darstellung mit Blick auf die an der Verschlussklappe anliegende Lasche, und
- Fig. 12: die Verschlussklappe der in den Figuren 1 bis 11 gezeigten Schelle in einer perspektivischen Einzelteildarstellung.

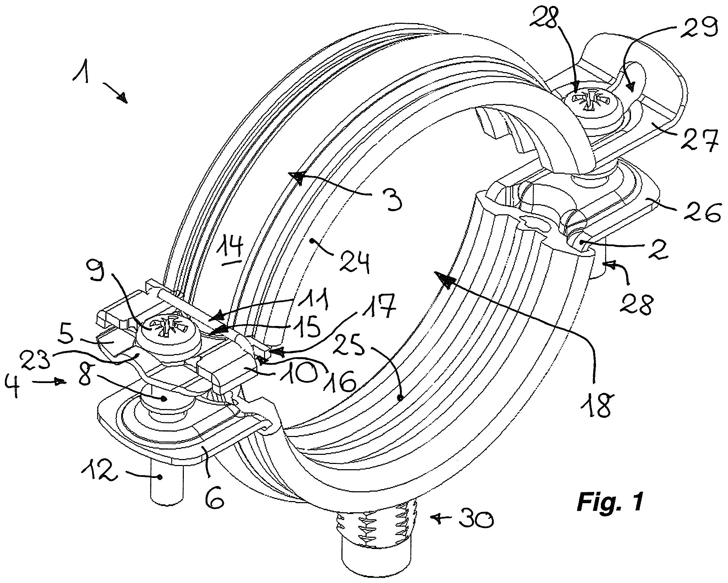

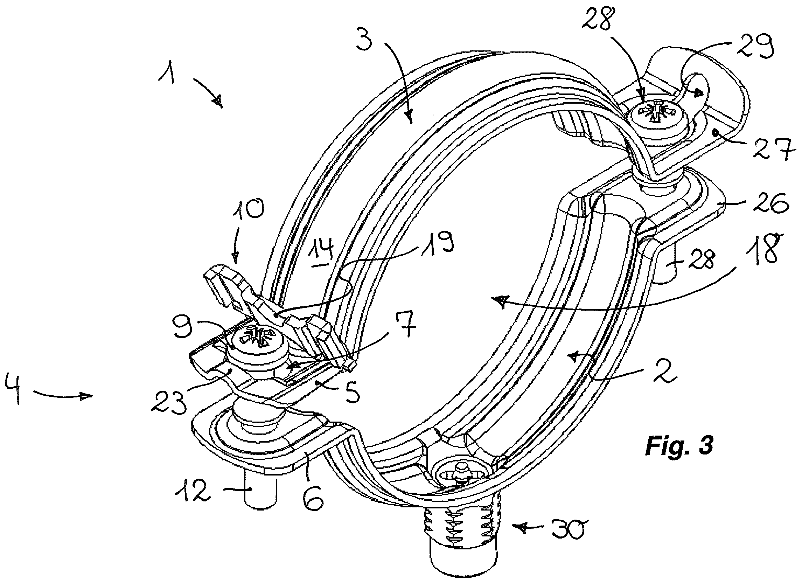

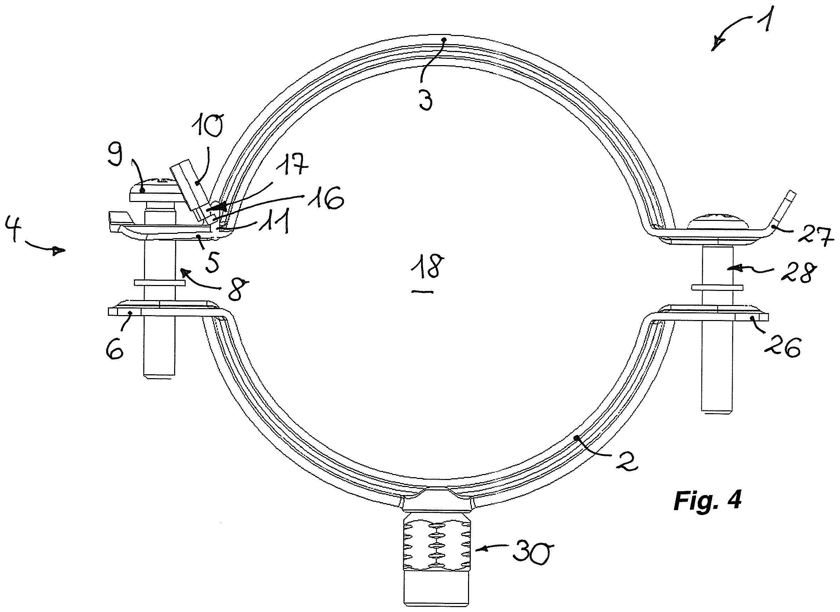

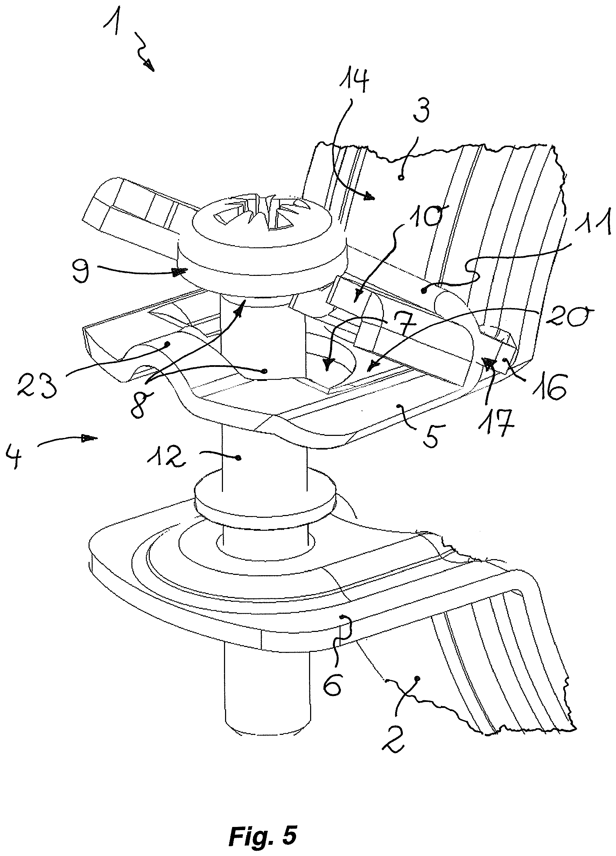

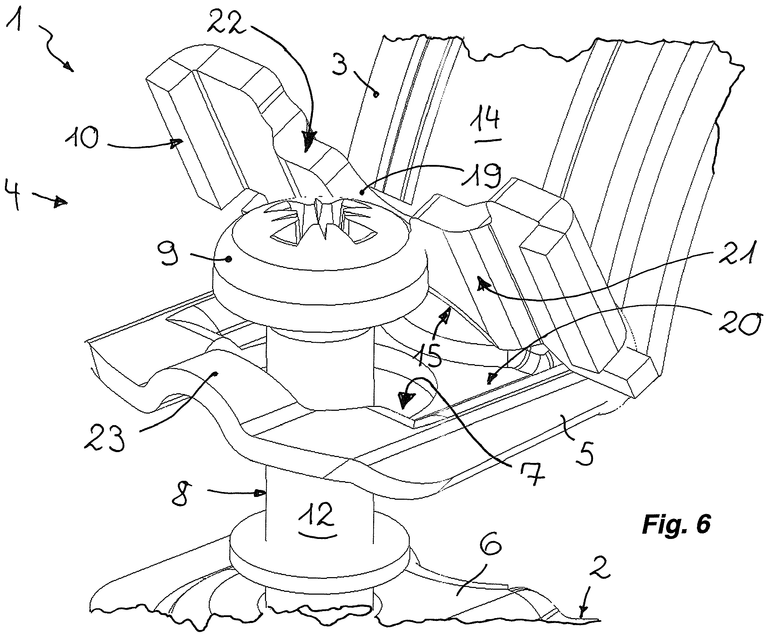

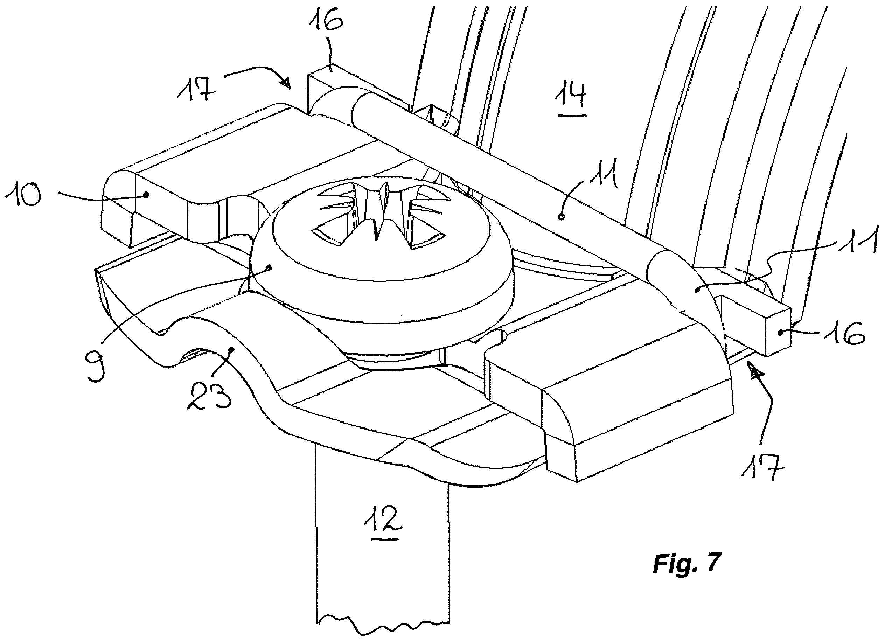

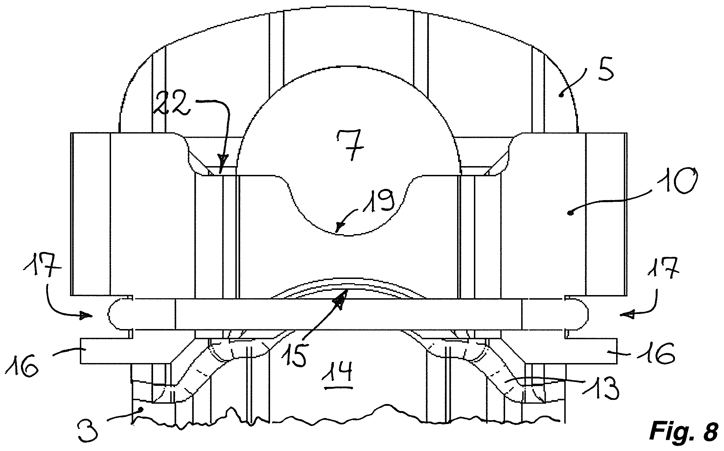

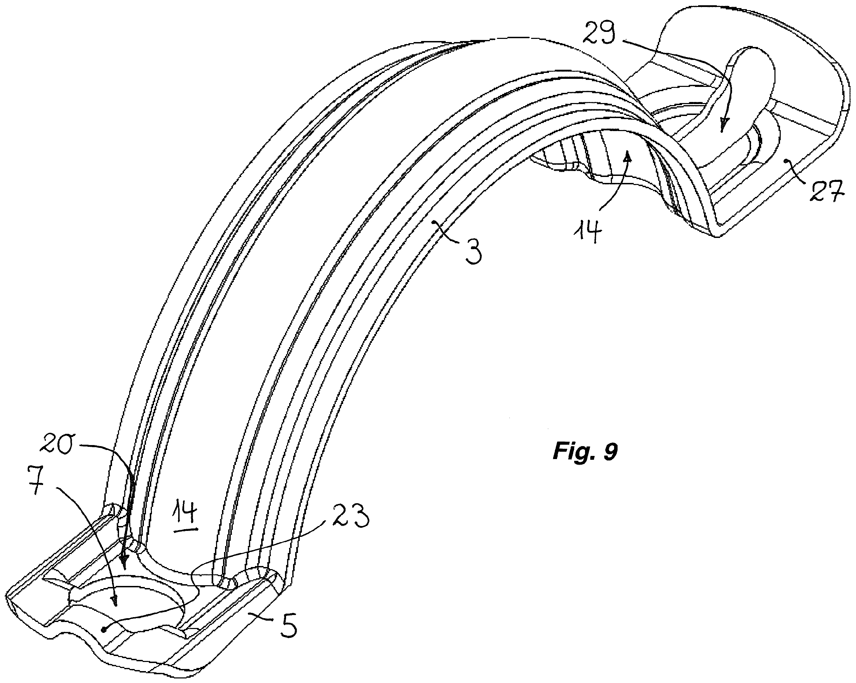

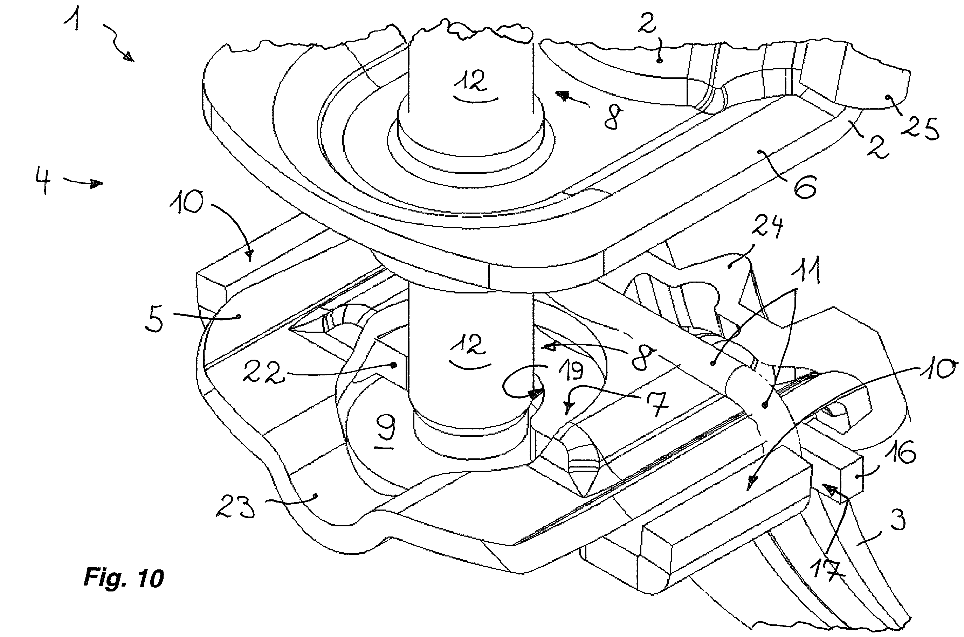

In den Figuren 1 bis 10 ist eine Vorrichtung 1 dargestellt, die wenigstens zwei Bauteile 2, 3 hat, von denen ein erstes Bauteil 2 als Oberteil und ein zweites Bauteil 3 als Unterteil ausgebildet ist. Diese wenigstens zwei, einander zugeordneten Bauteile 2, 3 sind mit Hilfe eines Verschlusses 4 miteinander verbindbar. Die beiden einander zugeordneten und mittels dem Verschluss 4 miteinander verbindbaren Bauteile 2, 3 können - wie hier - als voneinander getrennte und/oder trennbare Bestandteile der Vorrichtung 1 ausgebildet oder auch mit Abstand von dem Verschluss 4 gelenkig oder biegeelastisch miteinander verbunden sein.

Die hier dargestellte Vorrichtung 1 ist als Schelle und insbesondere als Rohrschelle ausgebildet, deren Schellenring durch die als oberes bzw. unteres Bauteil 2, 3 dienenden Ringhälften gebildet ist.

An den einander zugeordneten und hier als Oberteil 2 und als Unterteil 3 bezeichneten Bauteilen steht jeweils zumindest eine Lasche 5, 6 im Bereich eines Abbugs abgewinkelt vor. Von diesen, den wenigstens einen Verschluss 4 der Vorrichtung 1 bildenden und einander paarweise zugeordneten Laschen 5, 6 weist die eine Lasche 5 eine Durchstecköffnung 7 auf, durch die ein von der zugeordneten anderen Lasche 6 gehaltenen Verschlusszapfen 8 mit einem am freien Zapfenende vorgesehenen Zapfenkopf 9 derart durchsteckbar ist, dass der Verschlusszapfen 8 mit seinem Zapfenkopf 9 eine Verschlussklappe 10 aus einer an der benachbarten Lasche 5 anliegenden Ausgangsposition gegen die Rückstellkraft eines Federelements 11 in eine Offenposition verschwenkt, bis die Verschlussklappe 10 in ihre Ausgangslage zurückschwenkt, in welcher die von einem Zapfenschaft 12 des Verschlusszapfens 8 durchsetzte Verschlussklappe 10 den Zapfenkopf 9 hintergreift.

Das Federelement 11 ist hier als Gummiring 11 ausgebildet. Möglich ist aber auch, dass das Federelement durch mehrere Gummiringe, zumindest eine Schenkelfeder und/oder wenigstens eine Wendel-Zugfeder gebildet ist.

Da die Verschlussklappe 10 im Bereich des Abbugs um eine in Längsrichtung Pf1 der Biegelinie 13 des Abbugs angeordnete Schwenkachse verschwenkt werden kann und da der an der gegenüberliegenden anderen Lasche 6 gehaltene Verschlusszapfen 8 mit seinem Zapfenkopf 9 durch die Durchstecköffnung 7 gestoßen wird, wo der Verschlusszapfen 8 mit seinem an der Verschlussklappe 10 anstoßenden Zapfenkopf 9 die Verschlussklappe 10 verschwenkt, ist das Schließen des Verschlusses 4 mit einem vergleichsweise geringen Kraftaufwand auf einfache Weise möglich.

Zumindest das die Lasche 5 mit der Verschlussklappe 10 tragende Bauteil 3 weist im Bereich des Abbugs wenigstens eine Sicke 14 auf. Diese wenigstens eine Sicke 14 erhöht nicht nur die Belastbarkeit des Bauteiles 3, sondern sichert die Verschlussklappe 10 in Längsrichtung Pf1 der Biegelinie 13 des Abbugs gegen ein Verrutschen insbesondere während der Schwenkbewegung der Verschlussklappe 10. Die Verschlussklappe 10 weist dazu an ihrer dem benachbarten Bauteil 3 zugewandten Querseite wenigstens eine erste Aus- oder Einformung 15 auf, mit der die Verschlussklappe 10 an der wenigstens einen Sicke 14 des Bauteiles 3 anliegt. Dabei ist das als Rückstellkraft dienende und hier als Gummiring 11 ausgebildete Federelement 11 an zumindest einer Längsseite der Verschlussklappe 10 durch wenigstens eine zweite Ausformung 16 oder Einformung 17 der Verschlussklappe 10 gegen ein Abrollen oder Abrutschen gesichert gehalten.

Da die Verschlussklappe 10 an der hier als Schelle ausgebildeten Vorrichtung 1 nicht durch eine Durchstecköffnung der benachbarten Lasche hindurchgeführt werden muss, um eine Verschwenkbarkeit der Verschlussklappe 10 zu erreichen, und da die an zumindest einer der Laschen 5, 6 vorgesehene Durchstecköffnung 7 nur so bemessen sein muss, dass der Zapfenkopf 9 des Verschlusszapfens 8 hindurchpasst, zeichnet sich die hier dargestellte Vorrichtung 1 auch im Bereich ihres Verschlusses 4 durch eine vergleichsweise hohe Belastbarkeit aus, wobei die verschiedenen Bestandteile der Vorrichtung 1 vergleichsweise einfach ausgeführt und hergestellt sind.

Die hier dargestellte Vorrichtung 1 ist als Schelle und insbesondere als Rohrschelle ausgebildet. Der Schellenring der Vorrichtung 1 wird aus den Ringhälften gebildet, die hier auch als Bauteil 2, 3 bezeichnet sind. Der aus den Bauteilen 2, 3 gebildete Schellenring umgrenzt einen Aufnahmeraum 18 der zum Aufnehmen eines länglichen Gegenstandes, insbesondere eines länglichen Rohrabschnitts dient. Zum Einführen des länglichen Gegenstandes in den Aufnahmeraum 18 des Schellenrings ist eine Einführöffnung vorgesehen, die mit Hilfe des zumindest einen Verschlusses 4 verschließbar ist.

Da die Vorrichtung 1 sich auch im Bereich ihres Verschlusses 4 durch eine hohe Belastbarkeit auszeichnet, können in den vom Schellenring umgrenzten Aufnahmeraum 18 auch längere und entsprechend schwere Rohrabschnitte eingelegt werden, die nach dem Durchstoßen des Verschlusszapfens 8 durch die Durchstecköffnung 7 und nach dem Aufschwenken der Verschlussklappe 10 in die Offenposition sowie dem nachfolgenden Zurückschwenken der Verschlussklappe 10 in die an der benachbarten Lasche 5 anliegende Ausgangsposition, in welcher der Zapfenkopf 9 des Verschlusszapfens 8 von der Verschlussklappe 10 hintergriffen wird, im Aufnahmeraum 18 in einer Vormontagestellung sicher gehalten werden.

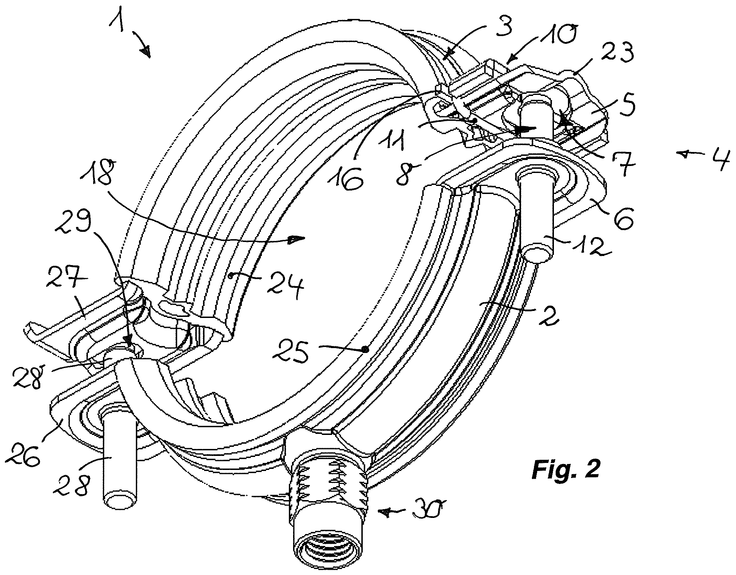

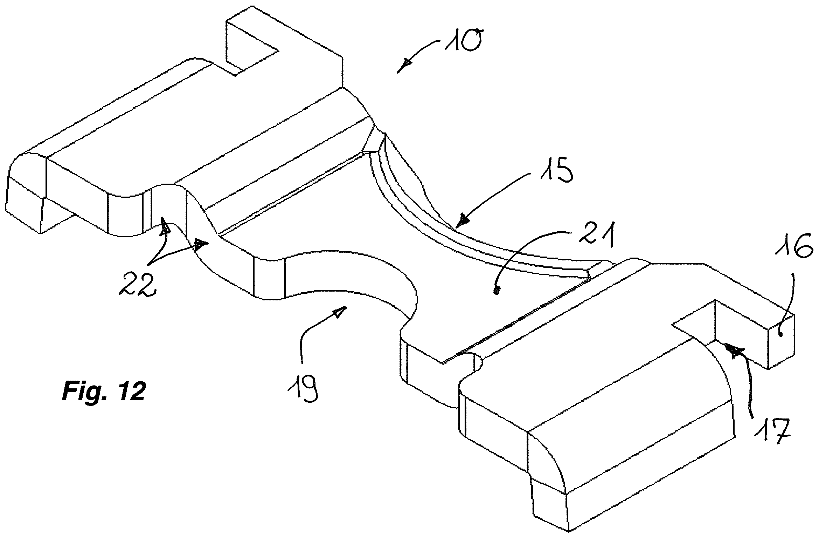

Wie aus einem Vergleich der Figuren 1, 6, 8, 10 und 12 deutlich wird, ist an gegenüberliegenden Längsseiten der Verschlussklappe 10 jeweils zumindest eine zweite Ausformung 16 beziehungsweise Einformung 17 zum gesicherten Halt des hier als Gummiring 11 ausgebildeten Federelements 11 vorgesehen. Da an den gegenüberliegenden Längsseiten der Verschlussklappe 10 jeweils zumindest eine zweite Ausformung 16 beziehungsweise Einformung 17 vorgesehen ist, wird einem unbeabsichtigten Abrollen oder Abrutschen des Federelements 11 von der Verschlussklappe 10 entgegengewirkt. Wie insbesondere aus den Figuren 2, 7, 8, 10 und 12 deutlich wird, ist das hier beispielhaft als Gummiring 11 ausgebildete Federelement 11 auf der dem benachbarten Bauteil 3 zugewandten Seite beidseits mittels einer an der Verschlussklappe 10 vorstehenden zapfenförmigen Ausformung 16 gesichert auf der Verschlussklappe 10 gehalten. Die Verschlussklappe 10 weist zusätzlich an ihren gegenüberliegenden Längsseiten jeweils eine randseitig offene zweite Einformung 17 oder Einkerbung auf, in welchen Einformungen 17 das Federelement 11 die Verschlussklappe 10 umgreift. Da das hier als Gummiring 11 ausgebildete Federelement 11 auf beiden Längsseiten der Verschlussklappe 10 in jeweils einer randseitig offenen Einformung 17 oder Einkerbung der Verschlussklappe 10 diese umgreift, und da das Federelement 11 zusätzlich auf der dem benachbarten Bauteil 3 zugewandten Seite dieser Einformungen 17 mittels an der Verschlussklappe 10 beidseits vorstehender zapfenförmiger Ausformungen 16 gesichert ist, wird das Federelement 11 auch während der Schwenkbewegungen der Verschlussklappe 10 an dieser sicher gehalten.

In den Figuren 1 bis 3, 6 bis 7, 10 und 12 wird deutlich, dass die gegenüberliegenden Randseiten der Verschlussklappe 10 derart abgewinkelt sind, dass die Verschlussklappe 10 mit ihren abgewinkelten Längsrändern die benachbarte Lasche 5 in der Ausgangslage zwischen sich aufnimmt. Auf diese Weise wird die Verschlussklappe 10 sicher an der benachbarten Lasche 5 gehalten, wenn die Verschlussklappe 10 den Zapfenkopf 9 des Verschlusszapfens 8 hintergreift.

An der dem Verschlusszapfen 8 zugewandten Querseite der Verschlussklappe 10 ist eine randseitig offene und vorzugsweise kreissegmentförmige Schaftöffnung 19 vorgesehen, die hier als Einformung oder Einkerbung ausgebildet ist und die in ihrer Kontur an den Querschnitt des Zapfenschafts formangepasst ist. Da der Zapfenschaft 9 in der Ausgangslage der Verschlussklappe 10 die Verschlussklappe 10 im Bereich der Schaftöffnung 19 durchsetzen kann, kann die Verschlussklappe 10 in ihrer an der benachbarten Lasche 5 anliegenden Ausgangsposition zurückschwenken und dabei gleichzeitig einen vergleichsweise großen rückseitigen Teilbereich des Zapfenkopfes 9 hintergreifen.

Insbesondere aus Figur 1 wird deutlich, dass der Verschlusszapfen 8 hier als Gewindeschraube ausgebildet ist, deren Schraubenkopf den Zapfenkopf 9 und deren Gewindeschaft den Zapfenschaft 12 bildet. Dabei ist die als Verschlusszapfen 8 dienende Gewindeschraube mit ihrem Außengewinde am Zapfenschaft 12 in ein Innengewinde an der dem Schraubenkopf abgewandten Lasche 6 einschraubbar.

Um die Relativposition der relativ zueinander schwenkbeweglich verbundenen Bestandteile, nämlich der Verschlussklappe 10 einerseits und der benachbarten Lasche 5 andererseits in der Ausgangslage zu sichern und derart festzulegen, dass die Verschlussklappe 10 den Zapfenkopf 9 sicher und unverrückbar hintergreift, weist die die Verschlussklappe 10 tragende Lasche 5 in dem dem benachbarten Bauteil 3 zugewandten Randbereich der Durchstecköffnung 7 eine Vertiefung 20 auf, wobei die Verschlussklappe 10 eine Ausbiegung oder Auswölbung 21 hat, die in der Ausgangslage an der Vertiefung 20 anliegt und zu dieser formangepasst ausgebildet ist. Zusätzlich ist zu diesem Zweck vorgesehen, dass sich die Vertiefung 20 von der an das benachbarte Bauteil 3 angrenzenden Querseite der Lasche 5 bis etwa zu einer der Biegelinie 13 parallelen Mittellinie der Durchstecköffnung 7 erstreckt. Damit die Verschlussklappe 10 den Zapfenkopf 9 möglichst großflächig hintergreift und damit die Verschlussklappe 10 gleichzeitig sich ebenfalls großflächig an die benachbarten Lasche 5 anlegen kann, hat die dem Bauteil 3 abgewandte Querseite der Verschlussklappe 10 im Bereich der Vertiefung 20 einen eingeschnittenen oder eingezogenen Randabschnitt 22, der in der Ausgangslage an der benachbarten Querseite der Vertiefung 20 anliegt. Die Durchstecköffnung 7 an der Lasche 5 und die als Einkerbung oder Einformung randseitig offen ausgebildete Schaftöffnung 19 an der Verschlussklappe 10 sind in der Ausgangslage konzentrisch zueinander angeordnet. Auf diese Weise wird der Verschlusszapfen 8 mit seinem Zapfenkopf 9 zur Hälfte über den Schaftdurchmesser und zur Hälfte über den Kopfdurchmesser des Zapfenkopfes 9 gehalten, wodurch ein Verrutschen der den Verschluss 4 bildenden Teile zueinander in jeglicher Richtung verhindert wird. Vorbekannte Verschlüsse, die ebenfalls als Schellenverschlüsse am Schellenring vorbekannter Schellen vorgesehen sind, weisen demgegenüber regelmäßig eine offene Langlochkontur in mindestens einem der Bestandteile des Verschlusses auf, die dann ein Verrutschen des Verschlusszapfens 8 in Längsrichtung des Langloches zulässt. Zudem bedarf die hier vorgesehene Konturpositionierung keines weiteren Durchbruches durch die Lasche 5, da die Lasche 5 und die Verschlussklappe 10 durch einfaches Aufeinanderlegen in Position zueinander ausgerichtet sind. Bei vorbekannten Lösungen sind demgegenüber die vergleichbaren Verschlussklappen über Ein- oder Ausschnitte im Schellenring eingehakt, wodurch aber immer eine weitere Schwächung des Schellenringes verbunden ist.

Die die Vertiefung 20 in Längsrichtung begrenzenden Flächen an der Lasche 5 bilden mit den die Auswölbung 21 in Längsrichtung begrenzenden Flächen an der Verschlussklappe 10 einen Formschluss, wodurch die Lasche 5 und die Verschlussklappe 10 zueinander positioniert sind. Gleiches gilt für die an den eingezogenen Randabschnitt 22 und die darin etwa mittig angeordnete Schaftöffnung 19 angrenzenden Flächen der Verschlussklappe 10 einerseits und die entsprechenden, die Vertiefung 20 begrenzenden Flächen an der Verschlussklappe 10. Hiermit wird die Positionierung in einem etwa rechten Winkel zur vorgenannten Ausrichtung sichergestellt. Die somit zueinander positionierten Teile, nämlich die Lasche 5 und die daran gehaltene Verschlussklappe 10, haben nun zwei konzentrisch zueinander ausgerichtete Kreissegmente, die die Durchstecköffnung 7 beziehungsweise die Schaftöffnung 19 begrenzen. Während durch die Durchstecköffnung 7 der Zapfenkopf 9 hindurchgeführt werden kann, verschließt die an der Verschlussklappe 10 an die Schaftöffnung 19 angrenzende Randfläche das darunterliegende Durchsteckloch 7 partiell wieder und bietet der rückseitigen Ringfläche am Zapfenkopf 9 eine entsprechende Auflage. Die Verschlussklappe 10 stützt sich nun mit ihrem die Schaftöffnung 19 begrenzenden Randbereich am Zapfenschaft 12 ab. Da die die Verschlusskappe 10 tragende Lasche 5 an dem dem benachbarten Bauteil 3 abgewandten Randbereich der Durchstecköffnung 7 eine Sicke 23 oder eine Ausbiegung aufweist, welche den Zapfenkopf 9 gegen ein Verschieben in die dem Bauteil 3 abgewandte Richtung sichert, wird durch die Konzentrität der Durchstecköffnung 7 sowie der Schaftöffnung 19 eine Umfassung des hier als Gewindeschraube ausgebildeten Verschlusszapfens 8 über die beiden Durchmesser und somit eine genaue Lagefixierung des Zapfenkopfes am Verschluss 4 erreicht.

Insbesondere aus Figur 1 wird deutlich, dass die Bauteile 2 und 3 innenseitig Schelleneinlagen 24, 25 insbesondere aus einem isolierenden Kunststoffmaterial tragen. Diese Schelleneinlagen 24, 25 umgreifen das benachbarte Bauteil 2, 3 mit den etwa U-förmig umgebogenen Längsrändern dieser Schelleneinlagen 24, 25.

Die hier dargestellte und als Rohrschelle ausgebildete Vorrichtung 1 weist einen Schellenring auf, der aus zwei separaten Ringhälften zusammengesetzt ist. Jeder dieser hier auch als Bauteil 2, 3 bezeichneten Ringhälften des Schellenringes weist an den freien Enden der Ringhälften jeweils eine Lasche 5, 6; 26, 27 auf, die an die benachbarte Ringhälfte einstückig angeformt ist und von dieser im Bereich eines Abbugs in etwa radialer Richtung nach außen vorsteht. Diese Laschen 5, 6; 26, 27 sind einander paarweise zugeordnet. Während an den Laschen 5, 6 der Verschluss 4 vorgesehen ist, sind die Laschen 26, 27 über eine Spann- oder Befestigungsschraube 28 miteinander verbunden. Dabei weist die Lasche 26 ein Gewindeloch mit Innengewinde auf, in welches Innengewinde die Befestigungsschraube 28 eingeschraubt ist. An der Lasche 27 ist eine Schraubenöffnung 29 vorgesehen, welche der Gewindeschaft der Befestigungsschraube 28 durchsetzt. Die Schraubenöffnung 29 ist hier als Langloch ausgebildet, dessen Längsrichtung sich in Längsrichtung der Lasche 27 erstreckt. Dabei ist die Lasche 27 an ihrem freien Laschenendbereich abgewinkelt, sodass sich die als Bauteile 2, 3 ausgebildeten Ringhälften auf der dem Verschluss 4 gegenüberliegenden Seite des Schellenrings an der dort vorgesehenen Einführöffnung zur Aufnahme eines länglichen Gegenstandes weit öffnen lassen. Dabei dienen die Laschen 26, 27 und die sie miteinander verbindende Befestigungsschraube 28 als Gelenk der als Rohrschelle ausgebildeten Vorrichtung 1. An dem Schellenring und vorzugsweise an einem seiner beiden Ringhälften ist insbesondere in etwa gleichmäßigem Abstand von den Laschen 5, 6; 26, 27 ein Gewindezapfen 30 vorgesehen, an dem eine Gewindestange, eine Schraube oder dergleichen Verbindungselement montiert werden kann. Mit Hilfe eines solchen Verbindungselementes lässt sich die hier als Schelle ausgebildete Vorrichtung 1 wand-, decken- oder bodenseitig mit einem hier nicht weiter dargestellten Vorrichtungsträger verbinden.

### Bezugszeichenliste

- 1: Vorrichtung (Schelle)
- 2: Bauteil (Oberteil)
- 3: Bauteil (Unterteil)
- 4: Verschluss
- 5: Lasche (am Bauteil 3)
- 6: Lasche (am Bauteil 2)
- 7: Durchstecköffnung
- 8: Verschlusszapfen
- 9: Zapfenkopf
- 10: Verschlussklappe
- 11: Gummiring oder dergleichen Federelement
- 12: Zapfenschaft
- 13: Biegelinie
- 14: Sicke
- 15: (erste) Ein- oder Ausformung (an der Verschlussklappe 10)
- 16: zweite Ausformung
- 17: zweite Einformung
- 18: Aufnahmeraum
- 19: Schaftöffnung
- 20: Vertiefung
- 21: Auswölbung
- 22: Randabschnitt
- 23: Sicke
- 24: Schelleneinlage
- 25: Schelleneinlage
- 26: Lasche
- 27: Lasche
- 28: Befestigungsschraube
- 29: Schraubenöffnung
- 30: Gewindezapfen
- Pf1: Längsrichtung der Biegelinie 13

## Patentansprüche

1. Vorrichtung (1) mit zwei Bauteilen (2, 3), von denen ein erstes Bauteil (2) als Oberteil und ein zweites Bauteil (3) als Unterteil ausgebildet ist, an welchen Bauteilen (2, 3) jeweils zumindest eine Lasche (5, 6) im Bereich eines Abbugs abgewinkelt vorsteht, welche Laschen (5, 6) paarweise einander zugeordnet sind und wenigstens einen Verschluss (4) der Vorrichtung (1) bilden, und von denen eine Lasche (5) eine Durchstecköffnung (7) aufweist, durch die ein von der zugeordneten anderen Lasche (6) gehaltener Verschlusszapfen (8) mit einem am freien Zapfenende vorgesehenen Zapfenkopf (9) derart durchsteckbar ist, dass der Verschlusszapfen (8) mit seinem Zapfenkopf (9) eine Verschlussklappe (10) aus einer an der benachbarten Lasche (5) anliegenden Ausgangsposition gegen die Rückstellkraft eines Federelements (11) in eine Offenposition verschwenkt, bis die Verschlussklappe (10) in ihre Ausgangslage zurückschwenkt, in welcher die von einem Zapfenschaft (12) des Verschlusszapfens (8) durchsetzte Verschlussklappe (10) den Zapfenkopf (9) hintergreift, wobei die Verschlussklappe (10) im Bereich des Abbugs um eine in Längsrichtung (PF1) der Biegelinie (13) des Abbugs angeordnete Schwenkachse verschwenkbar ist, wobei zumindest das die Lasche (5) mit der Verschlussklappe (10) tragende Bauteil (3) im Bereich des Abbugs wenigstens eine Sicke (14) aufweist, wobei die Verschlussklappe (10) an ihrer dem benachbarten Bauteil (3) zugewandten Querseite eine erste Ein- oder Ausformung (15) aufweist und mit dieser ersten Ein- oder Ausformung (15) derart an der wenigstens einen Sicke (14) anliegt, und wobei die Verschlussklappe (10) in Längsrichtung (Pf1) der Biegelinie (13) gegen ein Verrutschen gesichert ist, **dadurch gekennzeichnet, dass** das Federelement (11), das als zumindest ein Gummiring (11), zumindest eine Schenkelfeder und/oder zumindest eine Wendel-Zugfeder ausgebildet ist, an zumindest einer Längsseite der Verschlussklappe (10) durch wenigstens eine zweite Aus- oder Einformung (16, 17) der Verschlussklappe (10) an dieser gesichert gehalten ist.

2. Vorrichtung nach Anspruch 1, **dadurch gekennzeichnet, dass** die Vorrichtung (1) als Schelle und insbesondere als Rohrschelle ausgebildet ist, die einen Schellenring hat, der zum Aufnehmen eines länglichen Gegenstandes einen Aufnahmeraum (18) und zum Einführen des länglichen Gegenstandes in den Aufnahmeraum (18) eine Einführöffnung aufweist, die mit Hilfe des zumindest einen Verschlusses (4) verschließbar ist.

3. Vorrichtung nach Anspruch 1 oder 2, **dadurch gekennzeichnet, dass** an gegenüberliegenden Längsseiten der Verschlussklappe (10) jeweils zumindest eine zweite Ausformung (16) und/oder Einformung (17) zum gesicherten Halt des Federelements (11) vorgesehen ist.

4. Vorrichtung nach einem der Ansprüche 1 bis 3, **dadurch gekennzeichnet, dass** das Federelement (11) auf der dem benachbarten Bauteil (3) zugewandten Seite beidseits mittels einer an der Verschlussklappe (10) vorstehenden zapfenförmigen Ausformung (16) gesichert auf der Verschlussklappe (10) gehalten ist.

5. Vorrichtung nach einem der Ansprüche 1 bis 4, **dadurch gekennzeichnet, dass** auf gegenüberliegenden Seiten der Verschlussklappe (10) an dieser jeweils eine randseitig offene zweite Einformung (17) vorgesehen ist, in welchen zweiten Einformungen (17) das Federelement (11) die Verschlussklappe (10) umgreift.

6. Vorrichtung nach einem der Ansprüche 1 bis 5, **dadurch gekennzeichnet, dass** gegenüberliegende Randseiten der Verschlussklappe (10) derart abgewinkelt sind, dass die Verschlussklappe (10) mit ihren abgewinkelten Längsrändern die benachbarte Lasche (5) in der Ausgangslage zwischen sich aufnimmt.

7. Vorrichtung nach einem der Ansprüche 1 bis 6, **dadurch gekennzeichnet, dass** die Durchstecköffnung (7) einen gegenüber dem Durchmesser des Zapfenkopfes (9) vergrößerten und vorzugsweise kreisrunden Öffnungsdurchmesser aufweist.

8. Vorrichtung nach einem der Ansprüche 1 bis 7, **dadurch gekennzeichnet, dass** an der dem Verschlusszapfen (8) zugewandten Querseite der Verschlussklappe (10) eine randseitig offene und vorzugsweise kreissegmentförmige Schaftöffnung (19) vorgesehen ist, die insbesondere in ihrer Kontur an den Querschnitt des Zapfenschafts (12) formangepasst ist.

9. Vorrichtung nach einem der Ansprüche 1 bis 8, **dadurch gekennzeichnet, dass** der Verschlusszapfen (8) als Gewindeschraube ausgebildet ist, deren Schraubenkopf den Zapfenkopf (9) und deren Gewindeschaft den Zapfenschaft (12) bildet.

10. Vorrichtung nach Anspruch 9, **dadurch gekennzeichnet, dass** die Gewindeschraube in ein Innengewinde an der dem Schraubenkopf abgewandten Lasche (6) einschraubbar ist.

11. Vorrichtung nach einem der Ansprüche 1 bis 10, **dadurch gekennzeichnet, dass** die die Verschlussklappe (10) tragende Lasche (5) in dem dem benachbarten Bauteil (3) zugewandten Randbereich der Durchstecköffnung (7) eine Vertiefung (20) aufweist, und dass die Verschlussklappe (10) eine Ausbiegung oder Auswölbung (21) hat, die in der Ausgangslage an der Vertiefung (20) anliegt und vorzugsweise zu dieser formangepasst ausgebildet ist.

12. Vorrichtung nach Anspruch 11, **dadurch gekennzeichnet, dass** sich die Vertiefung (20) von der an das benachbarte Bauteil (3) angrenzenden Querseite der Lasche (5) bis etwa zu einer zur Biegelinie (13) parallelen Mittellinie der Durchstecköffnung (7) erstreckt.

13. Vorrichtung nach Anspruch 11 oder 12, **dadurch gekennzeichnet, dass** die dem Bauteil (3) abgewandte Querseite der Verschlussklappe (10) im Bereich der Vertiefung (20) einen eingeschnittenen oder eingezogenen Randabschnitt (22) hat, der in der Ausgangslage an der benachbarten Querseite der Vertiefung (20) anliegt.

14. Vorrichtung nach einem der Ansprüche 1 bis 13, **dadurch gekennzeichnet, dass** die Durchstecköffnung (7) an der Lasche (5) und die Schaftöffnung (19) an der Verschlussklappe (10) in der Ausgangslage konzentrisch zueinander angeordnet sind.

15. Vorrichtung nach einem der Ansprüche 1 bis 14, **dadurch gekennzeichnet, dass** die die Verschlussklappe (10) tragende Lasche (5) an dem dem benachbarten Bauteil (3) abgewandten Randbereich der Durchstecköffnung (7) eine Sicke (23) oder eine Ausbiegung aufweist, welche den Zapfenkopf (9) gegen ein Verschieben in die dem Bauteil (3) abgewandte Richtung sichert.

## Claims

1. Device (1) having two components (2, 3), of which a first component (2) is designed as an upper part and a second component (3) is designed as a lower part, on each of which components (2, 3) at least one tab (5, 6) projects at an angle in the region of a bend, which tabs (5, 6) are assigned to one another in pairs and form at least one closure (4) of the device (1), and of which one tab (5) has a push-through opening (7), through which a closure pin (8) held by the associated other tab (6) can be pushed with a pin head (9) provided at the free pin end in such a way that the closure pin (8) with its pin head (9) pivots a closure flap (10) from an initial position resting against the adjacent tab (5) into an open position against the restoring force of a spring element (11), until the closure flap (10) pivots back into its initial position, in which the closure flap (10), which is penetrated by a pin shank (12) of the closure pin (8), engages behind the pin head (9), wherein the closure flap (10) is pivotable in the region of the bend about a pivot axis arranged in the longitudinal direction (PF1) of the bending line (13) of the bend, wherein at least the component (3) carrying the tab (5) with the closure flap (10) has at least one bead (14) in the region of the bend, wherein the closure flap (10) has a first indentation or protrusion (15) on its transverse side facing the adjacent component (3) and rests with this first indentation or protrusion (15) against the at least one bead (14) in such a way, and wherein the closure flap (10) is secured against slipping in the longitudinal direction (Pf1) of the bending line (13), **characterized in that** the spring element (11), which is designed as at least one rubber ring (11), at least one leg spring and/or at least one helical tension spring, is held secured to the closure flap (10) on at least one longitudinal side of the closure flap (10) by at least one second protrusion or indentation (16, 17) of the closure flap (10).

2. Device according to claim 1, **characterized in that** the device (1) is designed as a clamp and in particular as a pipe clamp which has a clamp ring which has a receiving space (18) for receiving an elongate object and an insertion opening for inserting the elongate object into the receiving space (18), which opening can be closed with the aid of the at least one closure (4).

3. Device according to claim 1 or 2, **characterized in that** at least one second protrusion (16) and/or indentation (17) for securely holding the spring element (11) is provided in each case on opposite longitudinal sides of the closure flap (10).

4. Device according to one of claims 1 to 3, **characterized in that** the spring element (11), on the side facing the adjacent component (3), is held securely on the closure flap (10) on both sides by means of a pin-shaped protrusion (16) projecting on the closure flap (10).

5. Device according to one of claims 1 to 4, **characterized in that** on opposite sides of the closure flap (10), a second indentation (17) open at the edge is provided on the closure flap (10), in which second indentations (17) the spring element (11) engages around the closure flap (10).

6. Device according to one of claims 1 to 5, **characterized in that** opposite edge sides of the closure flap (10) are angled in such a way that the closure flap (10) with its angled longitudinal edges receives the adjacent tab (5) between them in the initial position.

7. Device according to one of claims 1 to 6, **characterized in that** the push-through opening (7) has an enlarged and preferably circular opening diameter compared to the diameter of the pin head (9).

8. Device according to one of claims 1 to 7, **characterized in that** on the transverse side of the closure flap (10) facing the closure pin (8) there is provided a shaft opening (19) which is open at the edge and preferably in the shape of a segment of a circle, the shape of which is adapted in particular to the cross-section of the pin shank (12).

9. Device according to one of claims 1 to 8, **characterized in that** the closure pin (8) is designed as a threaded screw whose screw head forms the pin head (9) and whose threaded shank forms the pin shank (12).

10. Device according to claim 9, **characterized in that** the threaded screw can be screwed into an internal thread on the tab (6) facing away from the screw head.

11. Device according to one of claims 1 to 10, **characterized in that** the tab (5) carrying the closure flap (10) has a recess (20) in the edge region of the push-through opening (7) facing the adjacent component (3), and **in that** the closure flap (10) has a bent portion or bulge (21) which, in the initial position, rests against the recess (20) and is preferably designed to match the shape thereof.

12. Device according to claim 11, **characterized in that** the recess (20) extends from the transverse side of the tab (5) adjoining the adjacent component (3) to approximately a center line of the push-through opening (7) parallel to the bending line (13).

13. Device according to claim 11 or 12, **characterized in that** the transverse side of the closure flap (10) facing away from the component (3) has, in the region of the recess (20), an incised or drawn-in edge section (22) which, in the initial position, rests against the adjacent transverse side of the recess (20).

14. Device according to one of claims 1 to 13, **characterized in that** the push-through opening (7) on the tab (5) and the shank opening (19) on the closure flap (10) are arranged concentrically to each other in the initial position.

15. Device according to one of claims 1 to 14, **characterized in that** the tab (5) carrying the closure flap (10) has a bead (23) or a bent portion on the edge region of the push-through opening (7) facing away from the adjacent component (3), which secures the pin head (9) against displacement in the direction facing away from the component (3).

## Revendications

1. Dispositif (1) comprenant deux éléments (2, 3), dont un premier élément (2) est réalisé en tant que partie supérieure et un deuxième élément (3) en tant que partie inférieure, sur chacun desquels éléments (2, 3) au moins une patte (5, 6) fait saillie de manière coudée dans la zone d'une courbure, lesquelles pattes (5, 6) sont associées par paires et forment au moins une fermeture (4) du dispositif (1), et dont une patte (5) présente une ouverture de passage (7) à travers laquelle un tenon de fermeture (8), maintenu par l'autre patte (6) associée et présentant une tête de tenon (9) prévue à l'extrémité libre du tenon, peut être inséré, de telle sorte que le tenon de fermeture (8) fait pivoter avec sa tête de tenon (9) un clapet de fermeture (10) d'une position initiale appliquée contre la patte (5) voisine dans une position ouverte à l'encontre de la force de rappel d'un élément élastique (11), jusqu'à ce que le clapet de fermeture (10) revienne dans sa position initiale dans laquelle le clapet de fermeture (10), traversé par une tige de tenon (12) du tenon de fermeture (8), s'engage derrière la tête de tenon (9), le clapet de fermeture (10) pouvant pivoter dans la zone de la courbure autour d'un axe de pivotement disposé dans la direction longitudinale (PF1) de la ligne de pliage (13) de la courbure, au moins l'élément (3) portant la patte (5) avec le clapet de fermeture (10) présentant au moins une nervure (14) dans la zone de la courbure, le clapet de fermeture (10) présentant, sur son côté transversal tourné vers l'élément (3) voisin, une première formation en creux ou en relief (15) et s'appliquant, par cette première formation en creux ou en relief (15), contre ladite au moins une nervure (14), et le clapet de fermeture (10) étant protégé contre un glissement dans la direction longitudinale (PF1) de la ligne de pliage (13),
**caractérisé en ce que** l'élément élastique (11), qui est réalisé sous la forme d'au moins un anneau en caoutchouc (11), d'au moins un ressort à branches et/ou d'au moins un ressort de traction hélicoïdal, est maintenu de manière sûre sur au moins un côté longitudinal du clapet de fermeture (10) par au moins une deuxième formation en creux ou en relief (16, 17) du clapet de fermeture (10) sur celui-ci.

2. Dispositif selon la revendication 1, **caractérisé en ce que** le dispositif (1) est réalisé sous la forme d'un collier et en particulier d'un collier de serrage qui possède une bague de collier qui présente un espace de réception (18) pour recevoir un objet allongé et une ouverture d'introduction pour introduire l'objet allongé dans l'espace de réception (18), laquelle peut être fermée à l'aide de ladite au moins une fermeture (4).

3. Dispositif selon la revendication 1 ou 2, **caractérisé en ce qu'**il est prévu sur chacun des côtés longitudinaux opposés du clapet de fermeture (10) au moins une deuxième formation en relief (16) et/ou en creux (17) pour le maintien sûr de l'élément élastique (11).

4. Dispositif selon l'une des revendications 1 à 3, **caractérisé en ce que** l'élément élastique (11) est maintenu de manière sûre sur le clapet de fermeture (10) des deux côtés, sur le côté tourné vers l'élément (3) voisin, au moyen d'une formation en relief (16) en forme de tenon faisant saillie sur le clapet de fermeture (10).

5. Dispositif selon l'une des revendications 1 à 4, **caractérisé en ce que**, sur chacun des côtés opposés du clapet de fermeture (10), il est prévu sur celui-ci une deuxième formation en creux (17) ouverte sur le bord, dans lesquelles deuxièmes formations en creux (17) l'élément élastique (11) entoure le clapet de fermeture (10).

6. Dispositif selon l'une des revendications 1 à 5, **caractérisé en ce que** des bords opposés du clapet de fermeture (10) sont coudés de telle sorte que le clapet de fermeture (10) reçoit entre lui, par ses bords longitudinaux coudés, la patte (5) voisine dans la position initiale.

7. Dispositif selon l'une des revendications 1 à 6, **caractérisé en ce que** l'ouverture de passage (7) présente un diamètre d'ouverture agrandi par rapport au diamètre de la tête de tenon (9) et de préférence circulaire.

8. Dispositif selon l'une des revendications 1 à 7, **caractérisé en ce qu'**il est prévu, sur le côté transversal du clapet de fermeture (10) tourné vers le tenon de fermeture (8), une ouverture de tige (19) ouverte sur le bord et de préférence en forme de segment de cercle, dont le contour est en particulier adapté à la forme de la section transversale de la tige de tenon (12).

9. Dispositif selon l'une des revendications 1 à 8, **caractérisé en ce que** le tenon de fermeture (8) est réalisé sous la forme d'une vis filetée dont la tête de vis forme la tête de tenon (9) et dont la tige filetée forme la tige de tenon (12).

10. Dispositif selon la revendication 9, **caractérisé en ce que** la vis filetée peut être vissée dans un filetage intérieur sur la patte (6) opposée à la tête de vis.

11. Dispositif selon l'une des revendications 1 à 10, **caractérisé en ce que** la patte (5) portant le clapet de fermeture (10) présente un renfoncement (20) dans la zone de bordure de l'ouverture de passage (7) tournée vers l'élément (3) voisin, et **en ce que** le clapet de fermeture (10) possède un renflement ou un bombement (21) qui, dans la position initiale, s'applique contre le renfoncement (20) et est de préférence réalisé de manière adaptée à la forme de ce dernier.

12. Dispositif selon la revendication 11, **caractérisé en ce que** le renfoncement (20) s'étend depuis le côté transversal de la patte (5) adjacent à l'élément (3) voisin jusqu'à environ une ligne médiane de l'ouverture de passage (7) parallèle à la ligne de pliage (13).

13. Dispositif selon la revendication 11 ou 12, **caractérisé en ce que** le côté transversal du clapet de fermeture (10) opposé à l'élément (3) possède, dans la zone du renfoncement (20), une section de bord (22) entaillée ou renfoncée qui, dans la position initiale, s'applique contre le côté transversal voisin du renfoncement (20).

14. Dispositif selon l'une des revendications 1 à 13, **caractérisé en ce que** l'ouverture de passage (7) sur la patte (5) et l'ouverture de tige (19) sur le clapet de fermeture (10) sont disposées concentriquement l'une par rapport à l'autre dans la position initiale.

15. Dispositif selon l'une des revendications 1 à 14, **caractérisé en ce que** la patte (5) portant le clapet de fermeture (10) présente, sur la zone de bord de l'ouverture de passage (7) opposée à l'élément (3) voisin, une nervure (23) ou un renflement qui empêche la tête du tenon (9) de se déplacer dans la direction opposée à l'élément (3).
